# EUROPÄISCHE PATENTSCHRIFT

(11) **EP 1 498 345 B1**
(45) Veröffentlichungstag und Bekanntmachung des Hinweises auf die Patenterteilung: **19.01.2011**
(21) Anmeldenummer: 04016394.1
(22) Anmeldetag: 13.07.2004
(51) Int. Cl.: B62D 25/04

(54) **Tragsäule für einen Fahrzueg-Karosserierahmen**
Pillar of a vehicle chassis
Colonne d'un châssis de véhicule

(30) Priorität: 18.07.2003 DE 10332633
(43) Veröffentlichungstag der Anmeldung: 19.01.2005
(73) Patentinhaber: AUDI AG, 85045 Ingolstadt (DE)
(72) Erfinder: Winkler, Andreas, 74074 Heilbronn (DE)
(74) Vertreter: Patzelt, Heike Anna Maria

(56) Entgegenhaltungen:
- EP-A- 1 074 457
- DE-A1- 4 208 408
- US-A- 5 398 989
- US-A1- 2002 167 197
- PATENT ABSTRACTS OF JAPAN Bd. 1997, Nr. 07, 31. Juli 1997 (1997-07-31) -& JP 09 066799 A (HONDA MOTOR CO LTD), 11. März 1997 (1997-03-11)

## Beschreibung

Die Erfindung betrifft eine Tragsäule für einen Fahrzeug-Karosserierahmen gemäß dem Oberbegriff des Patentanspruchs 1.

Aufgrund der sich fortlaufend verschärfenden Gesetze hinsichtlich eines Seitenaufpralls steigen die Anforderungen an die entsprechenden Fahrzeugkarosserie-Tragsäulen, insbesondere den B-Säulen, ständig an. Bestehende Konzepte stoßen in Bezug auf die notwendige Energieabsorption beim Seitenaufprall an ihre Grenzen.

Aus der DE 40 16 730 A1 ist eine Tragsäule für einen Karosserierahmen eines Kraftfahrzeugs bekannt. Die Tragsäule weist einen Stützträger auf, der im Innern hohl ist. Der Stützträger weist einen trapezförmigen Querschnitt auf. Im Innern des Stützträgers wird zu dessen Versteifung ein Rohr eingebracht und dort befestigt. Dieser als Hohlprofil ausgebildete Stützträger hat im Innern zusätzliche Vorrichtungen zur Befestigung des Versteifungsrohres im Hohlprofil. Bei einem Seitenaufprall dienen das voluminöse Versteifungsrohr und die Befestigungsvorrichtungen im Stützträger als zusätzliche Deformationselemente

Nachteilig bei einem solchen aufwendigen Aufbau, in dem ein Hohlkörper mit einem weiteren Hohlkörper zur Erhöhung der Stabilität bei Deformationsbelastungen versehen wird, ist, dass zusätzliche Befestigungsmittel für das Versteifungsrohr z.B. in Form von Auflageprofilen und Fixierblechen im Stützträger benötigt werden. Ein weiterer Nachteil besteht darin, das in einem solchen mit einem trapezförmigen Querschnitt ausgebildeten Stützträger keine Anbauteile wie z.B. Steuergeräte oder Gurtteile platzsparend aufgenommen werden können, weil der Stützträger eine geschlossene Querschnittsform aufweist. Ein weiterer Nachteil besteht darin, dass das Versteifungsrohr im Innern des Stützträgers ein großes Volumen einnimmt.

Aus der gattungsgemässen US2002/167197A1 ist eine Tragsäule für einen Fahrzeugkarosserierahmen bekannt, der zwischen einem unteren und oberen Träger einen Stützträger aufweist, der einen rinnenförmigen Querschnitt aufweist in dem ein Rohr angeordnet ist.

Nachteilig bei diesem Aufbau ist der große Platzbedarf des Rohrs im Stützträger.

Aufgabe der Erfindung ist es eine Tragsäule aufzuzeigen, die so ausgebildet ist, dass sie einerseits weitere Anbauteile wie z.B. Steuergeräte, Gurtteile und Sensoren aufnehmen kann und die andererseits so stabil ist, dass sie allen unfallbedingten Anforderungen gerecht wird.

Die Aufgabe wird dadurch gelöst, indem eine Tragsäule verwendet wird, die einen Stützträger aufweist der einen rinnenförmigen Querschnitt hat und die zwei parallele Zugteile aufweist, die zwischen dem oberen und unteren Träger den Stützträger verspannt, so dass die parallelen Zugteile die Zugspannungen gleichmäßig aufnehmen können, die unfallbedingt am Stützträger einwirken und möglichst im Wannenrandbereich des Stützträgers im Fahrzeuginnern verlaufen, um von allen Bauteilen die höchste Zugspannung aufnehmen zu können.

Der Vorteil der Erfindung ist es, dass in der rinnenförmigen Einbuchtung der Tragsäule Anbaugeräte, insbesondere Steuergeräte, Gurtteile oder Sensoren untergebracht werden können. Ein weiterer Vorteil besteht darin, dass durch die Verspannung des Stützträgers die Tragsäule genau in die Richtung stabilisiert werden kann, die von der äußeren Krafteinwirkung beim Unfall betroffen ist.

Vorteilhafte Weiterbildungen ergeben sich aus den Unteransprüchen. Hierbei kann der wannenförmige Stützträger ein robustes Gussteil und das Zugteil ein leichtes Profilteil sein. Für die Profile eignen sich Hohl-oder Vollprofile. Bei einem Vollprofil sind dünne Stangen vorteilhaft. Die Hohlprofilteile sind als Strangpress- oder Rollformprofilteile aufgebaut, die zumindest eine rohrförmige Kammer aufweisen. Die Profilteile können auch Flansche aufweisen, die zur Befestigung an den Stützträger dienen. Alternativ kann ein Zugteil aber auch ein Seil oder ein Blechband sein. Jedoch kann ein solcher Aufbau mit einem einteiligen aber zwei Stränge aufweisenden Zugband gleichfalls realisiert werden.

Die nachfolgenden Ausführungsbeispiele sollen anhand der Figuren 1 bis 9 näher beschrieben werden. Es zeigen:
- **Figur 1:**: Tragsäule mit zwei keilförmigen Spannvorrichtungen zwischen einem oberen und einem unteren Träger
- **Figur 2:**: Längsschnitt durch eine Tragsäule gemäß Figur 1
- **Figur 3:**: Querschnitt durch eine Tragsäule gemäß Figur 1
- **Figur 4:**: Tragsäule mit einem einstückigen Zugprofil mit Flansch
- **Figur 5:**: Tragsäule mit einem zweistückigen Zugprofil mit Flansch
- **Figur 6:**: Tragsäule mit einem Zugprofil ohne Flansch
- **Figur 7:**: Tragsäule mit Zugband.
- **Figur 8:**: Querschnitt durch eine Tragsäule mit Zugband
- **Figur 9:**: Längsschnitt durch eine Tragsäule mit Zugband

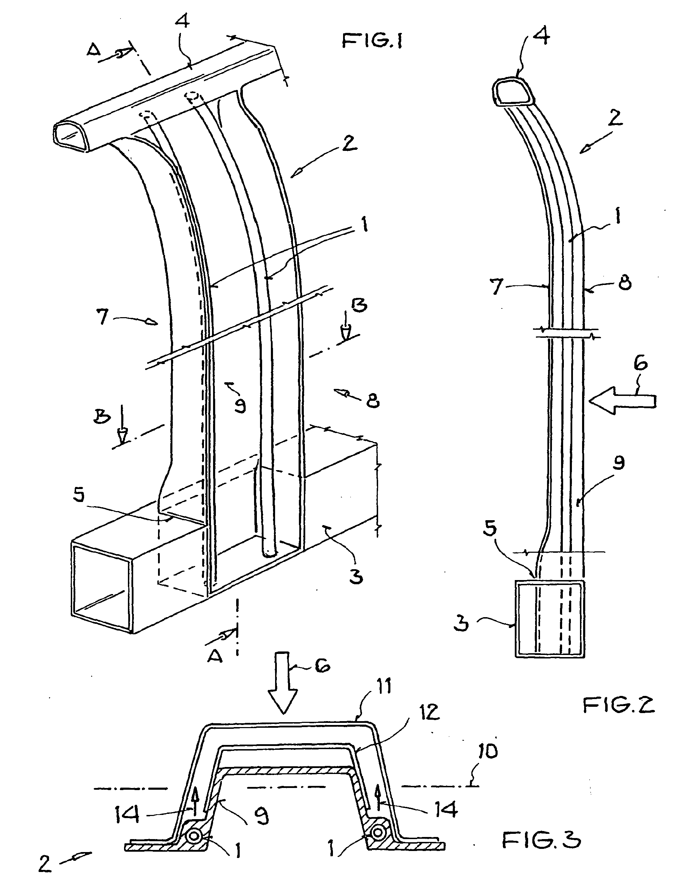

**Figur 1** zeigt eine Tragsäule **2.** Im Ausführungsbeispiel bildet diese später die B-Säule eines Kraftfahrzeugs aus. Die Tragsäule **2** weist einen Stützträger **9** und zwei Zugteile 1 auf, die zwischen einem oberen Träger **4,** der im Ausführungsbeispiel Bestandteil des Dachrahmens ist und einem unteren Träger **3,** der vom Schweller ausgebildet wird, angeordnet sind. Das Stützträger **9** wird seitlich von den zwei seilförmigen Zugteilen **1** verspannt. Diese Zugteile **1** dienen dazu, eine auf Druck basierende Verformung, die von der Fahrzeugaußenseite **8** einwirkt, zu verringern und das Zerbrechen der Tragsäule **2** in Richtung zur Fahrzeuginnenseite **7** zu verhindern. Die Zugteile **2** nehmen einen Teil der Energie aus dem Stützträger **9** auf und verteilen diese in andere Karosserieteile. Wichtig bei den Zugteilen **1** ist es, dass sie fest mit dem oberen und dem unteren Träger **4, 3** verbunden sind, so dass sich die Aufprallkräfte, insbesondere die daraus resultierende Zugspannung in der Tragsäule **2**, über einen größeren Teil der Karosserie verteilen können. Die Verbindung zwischen den Zugteilen **1** und den Trägern **3, 4** kann direkt zwischen den Zugteilen **1** und den Trägern **3, 4** ausgebildet sein, oder sie kann indirekt zwischen den Zugteilen **1** über den Stützträger **9** und den Trägern **3, 4** ausgebildet sein, wobei sowohl die Zugteile **1** und die Längsträger **3, 4** am Stützträger **9** befestigt sind und keine direkte Verbindung zwischen Zugteil **1** und Längsträger **3, 4** besteht. Diese Verbindung muss so fest sein, dass sie z.B. durch einen Seitencrash nicht gelöst werden kann. Zur festen Anbindung von Stützträger **9** und Zugteil **1** am Schweller **3**, weist der Schweller **3** eine Aussparung **5** auf, in der die Tragsäule **2** so eingebracht werden kann, dass sie die Aussparung **5** auffüllt. An den Verbindungsstellen wird dann die Tragsäule **2** mit dem unteren Träger **3** verschweißt. Hierbei kann dass Stützträger **9** und das oder die Zugteil/e getrennt voneinander angeschweißt werden oder aber das oder die Zugteil/e wird/werden im Vorfeld am Stützträger **9** angebracht und dann indirekt über den Stützträger **9** am Schweller **3** angeschweißt. Jedoch erfüllen auch andere Verbindungsarten den gleichen Zweck. Das seilförmige Zugteil **1** kann beliebige Formen aufweisen. Zum Beispiel kann es ein Drahtseil, eine Stange oder aber ein dünnes Rohr sein, dass zwischen dem Schweller **3** und dem Dachträger **4** gespannt ist. Auch können wie im Ausführungsbeispiel dargestellt mehrere Zugteile **1** verwendet werden. Vorteilhafterweise werden die Zugteile **1** im Stützträger **9** geführt. Wichtig beim Zugteil **1** ist es, dass es so gespannt ist, dass es die Kräfte und Spannungen von dem Stützträger **9** in andere Karosserieteile verteilt. Die Umwandlung der Aufprallenergie beim Seitencrash in Umformungsenergie im Zugteil **1** selbst ist nicht unbedingt erforderlich. Wichtig beim Zugteil **1** ist es, dass es die durch die Belastung entstandenen Spannungen aufnimmt und verteilt.

**Figur 2** zeigt eine Schnitt durch die Ebene A-A aus Figur 1. In diesem Schnitt zeigt sich, dass das Zugteil **1** im Stützträger **9** eingebettet ist. Beide Teile **1, 9** sind Bestandteil der Tragsäule **2.** Das Zugteil **1** erstreckt sich über die gesamte Höhe der Tragsäule **2** und bildet einen Formschluss mit Schweller **3** und Dachrahmen **4.** Hierbei hat ein Zugteil **1** die Aufgabe, einen Teil der durch den Seitenaufprall in der Tragsäule **2** auftretenden Zugspannungen aufzunehmen und zu verteilen und dadurch den Stützträger **9** zu unterstützen bzw. zu entlasten. Diese äußere, horizontale Krafteinwirkung wird in Figur durch den Pfeil **6** dargestellt. Durch das Verspannen des Stützträgers **9** mit Hilfe des Zugteils **1** wird verhindert, dass der Stützträger **9** an der Stelle der Krafteinwirkung im Außenbereich **8** auseinander bricht und ein Riss ins Fahrzeuginnere **7** entsteht. Um das Ablösen des Stützträgers **2** am unteren Träger **3** zu verhindern ist es vorteilhaft eine stabile Verbindung mit Hilfe einer Aussparung 5 am Schweller **3** herzustellen, wodurch einerseits eine Abstützung des Stützträgers **9** im Schweller **3** erzielt und andererseits die verbindbare Kontaktfläche vergrößert wird.

**Figur 3** zeigt eine Schnittdarstellung durch die B-B Ebene der Tragsäule **2** aus Figur 1. An dieser Tragsäule **2** ist ein Schließteil **12** und ein Seitenteil **10** angebracht, wie es bei einer Fahrzeug B-Säule üblich ist. In der dargestellten Ausführungsform sind die Zugteile **1** als Hohlprofile, insbesondere als Rohr aufgebaut. Alternativ können auch Vollprofile, insbesondere Stangen, oder Seile verwendet werden. Die Zugteile **1** sind hier durch Eingießen direkt in den Stützträger **9** der Tragsäule **2** integriert. Es ist dadurch kein zusätzlicher Arbeitsgang notwendig um die Zugteile **1** mit dem Stützträger **9** zu verbinden oder zumindest in dem Stützträger **2** zu führen. Vorteilhafterweise sind die Zugteile **1** auf der durch Zug belasteten Seite der Tragsäule **2** angeordnet. In dieser Darstellung wird deutlich, dass der Stützträger **9** eine Rinnenform aufweist. In dieser Rinne können im späteren Verlauf weitere Anbauteile, insbesondere Steuergeräte, platzsparend im Fahrzeug untergebracht werden. Ferner ist in dieser Abbildung eine Biegeachse **10** der B-Säule dargestellt, um die sich die B-Säule **2** verbiegt, wenn eine auf einen Seitencrash beruhende Kraft **6** von außen auf die B-Säule **2** einwirkt. Durch die Verspannung der Zugteile **1** am oberen und unteren Träger 4, 3 wird eine Gegenkraft **14** erzeugt, die ein Zusammenfalten der Tragsäule **2** um die Biegeachse **10** verringert.

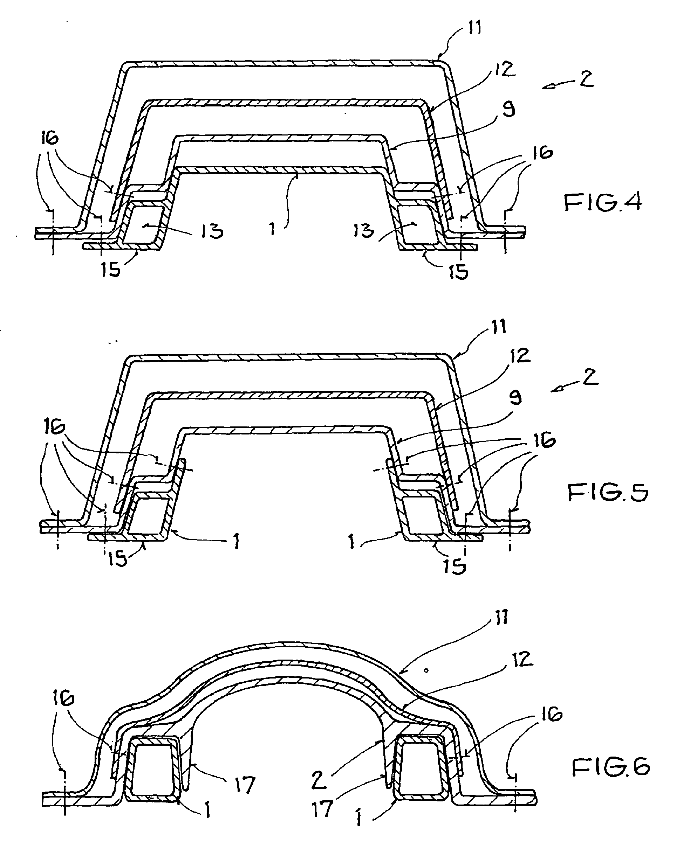

**Figur 4** zeigt eine weitere Schnittdarstellung. Diese zeigt eine andere Ausführungsform des Zugteils **1**. Bei diesem Zugteil **1** handelt es sich um ein einteiliges Rollformprofil **15**. Das einteilige Rollformprofil **15** weist zwei rohrförmige Abschnitte **13** auf, die hauptsächlich für die Verspannung der B-Säule verantwortlich sind. Das einteilige Rollformprofil **15** kann entweder direkt am Schweller oder am Dachrahmen fest angebracht sein, wobei sich als Verbindungsart das Schweißen besonders gut eignet. Jedoch kann die Anbringung des die Tragsäule **2** verspannenden Zugteils **1** auch indirekt erfolgen. Hierbei wird das Zugteil **1** am Stützträger 9 über Verbindungsmittel **16** angebracht und das Stützträger **9** am oberen und unteren Träger befestigt. Bei den Verbindungsmitteln **16** kann es sich z.B. um Nieten, Klebstoff oder eine Schweißverbindung handeln. Das Rollformprofil weist gleichfalls eine rinnenförmige Ausformung auf, die in die rinnenförmigen Ausformung des Stützträgers eingelegt ist, so dass weitere Komponenten platzsparend in dem Stützträger **9** angebracht werden können. Der Vorteil des einstückigen Aufbaus **15** von zwei rohrförmigen Abschnitten **13** besteht darin, dass nur ein Teil verarbeitet werden muss, was sich günstig auf die Fertigungskosten auswirkt. Ansonsten wird das Stützträger **9** wieder von außen vom Schließteil **12** und vom Seitenteil **11** abgedeckt.

In **Figur 5** werden die Zugteile **1** durch zwei einzelne aufgenietete, geschweißte oder eingeklebte Roll- oder Strangpressprofile aufgebaut um, im Gegensatz zur einstückigen Variante **15** aus Figur **4**, den auftretenden Belastungen flexibler begegnen zu können. Hierbei weisen die Zugteile **1** Flansche auf an denen Verbindungsmittel **16** angebracht werden können, die eine einfache Befestigung am Stützträger **9** über dessen gesamte Länge ermöglichen.

**Figur 6** zeigt zwei eingeklebte flanschlose Zugteile **1,** welche direkt in den Stützträger **9** geklebt sind. Die Zugteile **1** bestehen aus Profilteilen. Ohne Fügeflansch lassen sich beim Fertigen der Profilteile genauere Toleranzen einhalten. Zur einfachen Positionierung weist das Stützträger **9** zwei Aufnahmevorrichtungen **17** auf, in die die Zugteile **1** eingelegt und verklebt werden können.

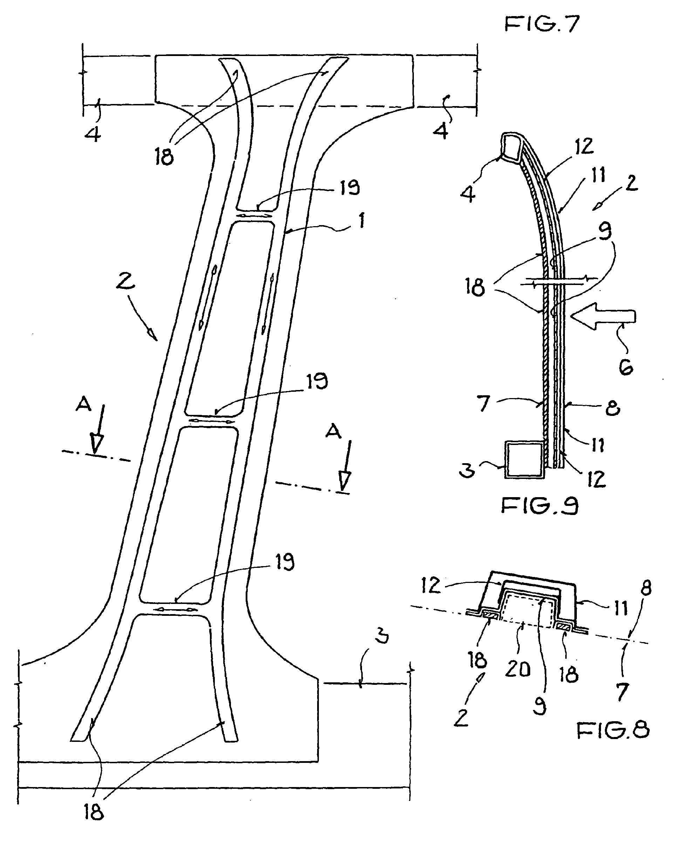

**Figur 7** zeigt ein Zugteil **1,** das als Band **18** ausgebildet ist. Abweichend von den vorhergehenden Figuren besteht das Zugteil **1** nicht aus einem Seil, Hohl- oder Vollprofil, sondern aus einem flachen aus Blech bestehendes Zugband **18**, welches gleichfalls die Zugspannung aufnehmen und verteilen kann. Durch dieses Zugband wird die Tragsäule **2** zwischen dem oberen und unteren Träger **4, 3** verspannt. Dies bietet die Möglichkeit, Anbauteile (Steuergerät, Gurt, Sensor, usw) in dem Stützträger, insbesondere in der rinnenförmigen Aussparung zu montieren. Die in der Figur gezeigte einstückige Ausführungsform des Zugbands **18** zeigt zwei Stränge, die vom unteren Träger **3** bis zum oberen Träger **4** reichen. Diese beiden Stränge sind leiterförmig durch Querstege **19** miteinander verbunden, diese Querstege sind jedoch optional, um z.B. das Aufklaffen der einen rinnenförmigen Querschnitt aufweisenden B-Säule **2,** insbesondere des Stützträgers **9,** im Falle eines Unfalls verhindern.

**Figur 8** zeigt einen Schnitt durch die Ebene A-A der Tragsäule **2** mit Zugband **18**, wie in Figur 7 dargestellt. Die Tragsäule **2** weist ein rinnenförmig ausgebildetes Stützträger **9** auf. Die Rinnenauswölbung des Stützträgers wird im Außenbereich **8** des Fahrzeug durch ein Schließteil **12** und ein Seitenteil **11** abgedeckt, wobei das Seitenteil **11** auch das Schließteil **12** abdeckt. Im Innenbereich **7** des Fahrzeugs befinden sich in der rinnenförmigen Einbuchtung des Stützträgers **9** Anbauteile **20**, wie z.B. Steuergeräte und Gurtstraffer, die hier platzsparend untergebracht werden können. Gleichfalls im Fahrzeuginnern befindet sich das einstückige Zugband **18**, das wie ein Deckel über die rinnenförmige Einbuchtung im Fahrzeuginnern gelegt wird. Vorteilhafterweise befinden sich im Stützträger **9** Führungsvorrichtungen an denen das Zugband **18** beim Verspannen positioniert werden kann.

**Figur 9** zeigt einen Längsschnitt durch das Stützträger **9** mit Zugband **18**. In diesem Ausführungsbeispiel ist das Zugband **18**, insbesondere die beiden Stränge, die vom unteren Träger 3 bis zum oberen Träger **4** reichen, fest und formschlüssig mit diesen beiden Trägern **3, 4** verbunden. Das Zugband **18** nimmt die Zugbelastungen des Stützträgers **9** auf verspannt sich netzartig. Dadurch wird verhindert, dass die B-Säule sich zu sehr in den Fahrzeuginnenraum verbiegt oder sogar durchbricht.

Besonders vorteilhaft bei allen gezeigten Ausführungsformen der Zugteile **1, 15, 18** ist es, wenn die Zugteile **1** im oder am Stützträger **9** integriert sind und am Fahrzeug am weitesten innen verlaufen, um von allen Bauteilen die höchsten Zugspannungen aufzunehmen.

Die Zugteile **1, 15, 18** können aus den unterschiedlichsten Metallen, insbesondere Aluminium oder Stahl, sowie Kunststoff oder Faserverbundwerkstoffen bestehen.

Der Stützträger ist vorteilhafterweise ein Gussteil um eine hohe Festigkeit erzielen zu können, jedoch können auch anders hergestellte Teile, insbesondere Profilteile, anstatt einem Gussteil verwendet werden.

## Patentansprüche

1. Fahrzeug-Karosserierahmen mit einem unteren Träger (3), einem oberen Träger (4) und einer Tragsäule (2), die zwischen dem unteren Träger (3) und dem oberen Träger (4) angeordnet ist und die einen Stützträger (9) aufweist
**dadurch gekennzeichnet, dass**
- der Stützträger (9) einen rinnenförmigen Querschnitt hat und
- die Tragsäule (2) mindestens zwei parallel zueinander angeordnete Zugteile (1) aufweist, die in der Tragsäule angeordnet sind,
- die Zugteile (1) zwischen dem unteren und oberen Träger (3, 4) gespannt sind und die
- eine unfallbedingte Zugbelastung aus dem Stützträger (9) aufnehmen.

2. Fahrzeug-Karosserierahmen nach Patentanspruch 1, **dadurch gekennzeichnet, dass**
ein Zugteil (1) ein Seil ist.

3. Fahrzeug-Karosserierahmen nach Patentanspruch 1, **dadurch gekennzeichnet, dass**
ein Zugteil (1) ein Blechband (18) ist.

4. Fahrzeug-Karosserierahmen nach Patentanspruch 1, **dadurch gekennzeichnet, dass**
die beiden Zugteile (1) als ein leiterförmig ausgebildetes Blechband (18) ausgebildet sind.

5. Fahrzeug-Karosserierahmen nach Patentanspruch 1, **dadurch gekennzeichnet, dass**
die Zugteile (1) Profilteile (15) sind.

6. Fahrzeug-Karosserierahmen nach Patentanspruch 5, **dadurch gekennzeichnet, dass**
die Zugteile (1) Vollprofilteile, insbesondere Stangen sind.

7. Fahrzeug-Karosserierahmen nach Patentanspruch 5, **dadurch gekennzeichnet, dass**
die Zugteile (1, 15) Hohlprofilteile sind.

8. Fahrzeug-Karosserierahmen nach Patentanspruch 7, **dadurch gekennzeichnet, dass**
die Zugteile (1, 15) Rohre sind.

9. Fahrzeug-Karosserierahmen nach Patentanspruch 7, **dadurch gekennzeichnet, dass**
die Zugteile (1, 15) Strangpressprofilteile sind.

10. Fahrzeug-Karosserierahmen nach Patentanspruch 7, **dadurch gekennzeichnet, dass**
die Zugteile (1, 15) Rollformprofilteile sind.

11. Fahrzeug-Karosserierahmen nach Patentanspruch 7, **dadurch gekennzeichnet, dass**
die Hohlprofilteile (1) Flansche aufweisen, die zur Befestigung an die Tragsäule (2) dienen.

12. Fahrzeug-Karosserierahmen nach Patentanspruch 1, **dadurch gekennzeichnet, dass**
die parallelen Zugteile (1) aus einem Mehrkammerprofilteil gebildet sind, das mindestens zwei parallele Kammern, zwischen dem unteren und oberen Träger (4, 3) verlaufend, aufweist.

## Claims

1. Vehicle body frame having a lower beam (3), an upper beam (4) and a supporting pillar (2) which is arranged between the lower beam (3) and the upper beam (4) and which has a supporting beam (9),
**characterized in that**
- the supporting beam (9) has a channel-shaped cross section and
- the supporting pillar (2) has at least two tensile parts (1) which are arranged parallel to one another and are arranged in the supporting pillar,
- the tensile parts (1) are tensioned between the lower and upper beams (3, 4) and
- absorb an accident-induced tensile loading from the supporting beam (9).

2. Vehicle body frame according to Claim 1, **characterized in that**
one tensile part (1) is a cable.

3. Vehicle body frame according to Claim 1, **characterized in that**
one tensile part (1) is a sheet-metal strip (18).

4. Vehicle body frame according to Claim 1, **characterized in that**
the two tensile parts (1) are formed as a ladder-shaped sheet-metal strip (18).

5. Vehicle body frame according to Claim 1, **characterized in that**
the tensile parts (1) are profile parts (15).

6. Vehicle body frame according to Claim 5, **characterized in that**
the tensile parts (1) are solid profile parts, in particular rods.

7. Vehicle body frame according to Claim 5, **characterized in that**
the tensile parts (1, 15) are hollow profile parts.

8. Vehicle body frame according to Claim 7, **characterized in that**
the tensile parts (1, 15) are tubes.

9. Vehicle body frame according to Claim 7, **characterized in that**
the tensile parts (1, 15) are extruded profiles.

10. Vehicle body frame according to Claim 7, **characterized in that**
the tensile parts (1, 15) are roll-formed profile parts.

11. Vehicle body frame according to Claim 7, **characterized in that**
the hollow profile parts (1) have flanges which serve for fastening to the supporting pillar (2).

12. Vehicle body frame according to Claim 1, **characterized in that**
the parallel tensile parts (1) are formed from a multi-chamber profile part which has at least two parallel chambers running between the lower and upper beams (3, 4).

## Revendications

1. Châssis de carrosserie de véhicule comprenant un support inférieur (3), un support supérieur (4) et une colonne de support (2), qui est disposée entre le support inférieur (3) et le support supérieur (4) et qui présente un support d'appui (9), **caractérisé en ce que**
- le support d'appui (9) a une section transversale en forme de canal et
- la colonne de support (2) présente au moins deux tirants (1) disposés parallèlement l'un à l'autre qui sont disposés dans la colonne de support,
- les tirants (1) sont tendus entre le support inférieur et le support supérieur (3, 4), et
- reçoivent une contrainte de traction, provoquée lors d'un accident, provenant du support d'appui (9).

2. Châssis de carrosserie de véhicule selon la revendication 1, **caractérisé en ce que** l'un des tirants (1) est un câble.

3. Châssis de carrosserie de véhicule selon la revendication 1, **caractérisé en ce que** l'un des tirants (1) est un ruban de tôle (18).

4. Châssis de carrosserie de véhicule selon la revendication 1, **caractérisé en ce que** les deux tirants (1) sont réalisés sous forme de ruban de tôle (18) réalisé sous forme d'échelle.

5. Châssis de carrosserie de véhicule selon la revendication 1, **caractérisé en ce que** les tirants (1) sont des pièces profilées (15).

6. Châssis de carrosserie de véhicule selon la revendication 5, **caractérisé en ce que** les tirants (1) sont des pièces profilées massives, notamment des barres.

7. Châssis de carrosserie de véhicule selon la revendication 5, **caractérisé en ce que** les tirants (1, 15) sont des pièces profilées creuses.

8. Châssis de carrosserie de véhicule selon la revendication 7, **caractérisé en ce que** les tirants (1, 15) sont des tubes.

9. Châssis de carrosserie de véhicule selon la revendication 7, **caractérisé en ce que** les tirants (1, 15) sont des pièces profilées filées.

10. Châssis de carrosserie de véhicule selon la revendication 7, **caractérisé en ce que** les tirants (1, 15) sont des pièces profilées laminées.

11. Châssis de carrosserie de véhicule selon la revendication 7, **caractérisé en ce que** les pièces profilées creuses (1) présentent des brides, qui servent à la fixation à la colonne de support (2).

12. Châssis de carrosserie de véhicule selon la revendication 1, **caractérisé en ce que** les tirants parallèles (1) sont formés à partir d'une pièce profilée à plusieurs chambres, qui présente au moins deux chambres parallèles, s'étendant entre le support inférieur et le support supérieur (4, 3).
